# EUROPÄISCHE PATENTSCHRIFT

(11) **EP 1 016 042 B1**
(45) Veröffentlichungstag und Bekanntmachung des Hinweises auf die Patenterteilung: **04.12.2002**
(21) Anmeldenummer: 98948842.4
(22) Anmeldetag: 18.08.1998
(51) Int. Cl.: G07C 9/00, G07F 7/12

(54) **HERSTELLUNGS- UND VERIFIZIERUNGSVERFAHREN FÜR EIN ZUGANGSBERECHTIGUNGSMITTEL SOWIE ZUGANGSBERECHTIGUNGSMITTEL**
PRODUCTION AND VERIFICATION METHOD FOR AN ACCESS AUTHORISATION MEANS AND CORRESPONDING ACCESS AUTHORISATION MEANS
PROCEDE DE PRODUCTION ET DE VERIFICATION D'UN MOYEN D'AUTORISATION D'ACCES, ET MOYEN D'AUTORISATION D'ACCES

(30) Priorität: 18.08.1997 DE 19735628
(43) Veröffentlichungstag der Anmeldung: 05.07.2000
(73) Patentinhaber: Puff, Johannes, 53111 Bonn (DE)
(72) Erfinder: Puff, Johannes, 53111 Bonn (DE)
(74) Vertreter: Schneiders, Josef, Dipl.-Ing.
(86) Internationale Anmeldenummer: EP9805221
(87) Internationale Veröffentlichungsnummer: WO99009526

(56) Entgegenhaltungen:
- EP-A- 0 682 328
- WO-A-91/19614
- DE-A- 4 322 642
- US-A- 4 218 674

## Beschreibung

Die Erfindung betrifft ein Verfahren zur Herstellung eines nicht personengebundenen Zugangsberechtigungsmittels und zur Verifizierung der Zugangsberechtigung. Weiterhin ist ein Zugangsberechtigungsmittel, insbesondere eine Eintrittskarte, zur Durchführung des erfindungsgemäßen Verfahrens Gegerstand der Erfindung.

Als nicht personengebundene Zugangsberechtigungsmittel finden Eintrittskarten weiteste Verbreitung, die von den jeweiligen Veranstaltern beispielsweise für Konzerte, Sport-, Kultur- und sonstige Veranstaltungen gegen entsprechende Eintrittsgebühren verkauft werden und den jeweiligen Besitzern als Zugangsberechtigungsmittel für das jeweilige Ereignis dienen.

Ein zunehmer des Problem ist die unbefugte Vervielfältigung von Eintrittskarten bzw. sonstiger Zugangsberechtigungsmittel. Von legal erworbenen Mustern werden dabei mittels gängiger Reproduktionsverfahren - von Fotokopien bis hin zu aufwendigen Druckverfahren - Duplikate gefertigt, die illegal verbreitet werden. Neben den beträchtlichen Einbußen für die Veranstalter kommt es dadurch auch zu mitunter ausgesprochenen gefährlichen Situationen für das Publikum, da durch die nicht nachvollziehbare Anzahl von gefälschten Eintrittskarten Überbelegungen der Veranstaltungsplätze auftreten.

Um derartigen Mißbrauch zu verhindern, ist es nach dem Stand der Technik bereits bekannt, Eintrittskarten vermeintlich fälschungssicher auszugestalten.

Hierzu werden beispielsweise kodierte Kennzeichnungen mit sichtbaren oder unsichtbaren Farben aufgedruckt, besonders präpariertes Papier mit Metallfäden oder sonstigen Einlagen verwendet, Wasserzeichen eingeprägt, Magnetstreifen oder Mikrochips integriert oder Hologramme angebracht. Auf diese Weise präparierte Eintrittskarten lassen sich zwar nicht mehr einfach kopieren. Es zeigt sich jedoch zunehmend, daß derartige Signaturen für professionelle, gut ausgestattete Fälscher praktisch kein Hindernis darstellen, so daß die Fälschungen von den vermeintlich fälschungssicheren Originalen praktisch nicht zu unterscheiden sind.

Ein ebenfalls bekanntes Verfahren, bei dem jede einzelne Eintrittskarte mit einem individuellen Kenncode versehen ist und Zugang nur dann gewährt wird, wenn dieser mit einem in einer Datenbank enthaltenen Code übereinstimmt, hat zwar den Vorteil, daß die Anzahl der eingelassenen Personen kontrollierbar bleibt. Nachteilig ist daran jedoch, daß durch redlich erworbene Eintrittskarten kein Einlaß mehr zu erlangen ist, wenn zuvor durch eine Fälschung die Zugangsberechtigung entwertet worden ist. Außerdem ist für das Publikum im Vorfeld nicht erkennbar, ob es sich um eine Fälschung handelt oder nicht, da diese mit einschlägigen Kontrollmaßnahmen nicht zu entlarven sind.

Eine weitere Möglichkeit, die Fäischungssicherheit durch Erfassung von persönlichen Merkmalen, beispielsweise Fingerabdrücken, zu erhöhen, würde beim Publikum zum einen kaum auf Akzeptanz stoßen und wäre zum anderen aus Datenschutzgründen mehr als bedenklich.

Daraus ergibt sich die Aufgabenstellung für die vorliegende Erfindung, ein Herstellungs- und Verifikationsverfahren für Zugangsberechtigungsmittel, insbesondere Eintrittskarten, sowie zur Durchführung dieses Verfahrens geeignete Zugangsberechtigungsmittel zur Verfügung zu stellen, welches eine erhöhte Fälschungssicherheit bietet, ohne personenspezifische Merkmale zu nutzen.

Zur Lösung d eser Aufgabenstellung schlägt die Erfindung ein Verfahren mit folgenden Schritten vor:
- Anbringung von biogen strukturiertem Material an dem Zugangsberechtigungsmittel;
- definierte Erfassung von charakteristischen Parametern des biogenen Materials;
- Speicherung der aufgenommenen Parameterdaten in Datensätzen;
- Verifikation durch definierte Messung der vorgegebenen Parameter und Vergleich der dabei ermittelten Parameterdaten mit den vorhandenen Datensätzen;
- Freigabe des Zugangs bei Erfüllung von definierten Koinzidenzkriterien.

Erfindungsgemäß wird ein an sich bekanntes Zugangsberechtigungsmittel, beispielsweise eine Eintrittskarte aus Papier, Pappe oder Kunststoff, mit einem organischen Substrat versehen, welches praktisch eine biogene Signatur darstellt. Zu diesem Zweck wird vorzugsweise ein pflanzliches Substrat mit Laub- oder Blütenbestandteilen oder auch Gewebeschnitten unlösbar an dem Zugangsberechtigungsmittel befestigt. Die Verwendung von Laub- oder Blütenblättern hat dabei den Vorzug, daß es sich um ein nachwachsendes Rohmaterial handelt, welches bei schonender Gewinnung keine ökologischen Schäden anrichtet.

Zweckmäßigerweise wird deutlich erkennbar strukturiertes pflanzliches Material verwendet, welches eine entsprechend einfachere Identifizierung zuläßt. Alternativ ist die Verwendung von Material tierischen Ursprungs denkbar, von Gewebestücken bis hin zu mikrobiologisch erzeugten Substraten. Selbst die Verwendung fossiler Präparate ist denkbar.

Der besondere Vorteil in der erfindungsgemäßen Verwendung des biogenen Materials besteht darin, daß dessen - häufig fraktale - Struktur in makroskopischem Maßstab weitgehend zufällig ist, so daß es sich jeweils um eine Art "biogenen Fingerabdruck" handelt, der hinsichtlich seiner charakteristischen Strukturparameter, d.h. Gestalt- und Materialparameter, absolut einzigartig ist.

Gemäß dem folgenden Schritt des erfindungsgemäßen Verfahrens werden derartige charakteristische Parameter nach vorab definierten Meßverfahren, beispielsweise lokal beschränkt oder umfassend, mittels entsprechender Meßverfahren zerstörungsfrei erfaßt. So kann mittels optischer Meßverfahren beispielsweise der Umriß eines Blattes sowie die Nervatur in ausgewählten Bereichen aufgenommen werden. Weitere Meßgrößen können beispielsweise auch das lokale spektrale Absorptionsvermögen oder dergleichen beinhalten. Durch eine einfache Analyse ist organische Materie von künstlichen Fälschungen unterscheidbar.

Die auf diese Weise gewonnenen, charakteristischen Parameterdaten werden als Datensätze in Computer-Datenbanken abgespeichert und sind damit besonders effizient handhabbar. Über Massenspeicher-Medien wie CD-ROM oder dergleichen können authorisierte Verkaufsstellen leicht mit Daten versorgt werden.

Die Verifikation der Zugangsberechtigung erfolgt durch eine erneute, definierte Messung der durch die Erfassung vorgegebenen Parameter. Mittels automatisierter Meßeinrichtungen sind diese Messungen reproduzierbar mit hoher Genauigkeit durchführbar, so daß der anschließende Vergleich der bei diesem Lesevorgang ermittelten Parameterdaten mit den zuvor erfaßten, gepeicherten Datensätzen eine eindeutige Identifizierung zuläßt.

Erst wenn der Vergleich die Erfüllung von vorab definierten Koinzidenzkriterien, d.h., die Übereinstimmung der Merkmale innerhalb gewisser Fehlertoleranzen ergibt, erfolgt die Freigabe des Zugangs.

Der besondere Vorteil der Erfindung besteht darin, daß jede biogen strukturierte Materialprobe zum einen absolut einzigartig ist und zum anderen mitteils technischer Herstellungsverfahren unter vertretbarem Aufwand unmöglich in allen Einzelheiten reproduzierbar ist, die als Koinzidenzkriterien herangezogen werden können. Eine drucktechnische Vervielfältigung scheidet z. B. allein deswegen aus, da beispielsweise ein pflanzliches Blatt neben der optisch sichtbaren Zeichnung eine praktisch allen Menschen eines Kulturkreises geläufige, räumliche Struktur aufweist, die damit als solche auch ohne besondere Einweisung erkennbar ist. Somit ist eine sichere und schnelle Zugangskontrolle auch bei überlastetem Kontrollpersonal unter widrigen Bedingungen schnell und sicher möglich.

Die Verifikation läßt sich dadurch zugleich vereinfachen und noch weiter gegen Fälschungsversuche absichern, daß die Erfassung und Messung der Parameter gemäß einer auf dem Zugangsberechtigungsmittel angegebenen Meßvorschrift erfolgt. Um die Manipulationssicherheit zu erhöhen, wird die Meßvorschrift vorzugsweise in einer Referenzangabe verschlüsselt, die beispielsweise lediglich einen Zahlencode enthält, der nur zusammen mit entsprechenden Schlüsseldateien dechiffrierbar ist. Auf einer Eintrittskarte ist hierzu beispielsweise in maschinenlesbarer, codierter Form - als Barcode, Magnetstreifen, Speicherchip, Klarschrift oder dergleichen - eine Referenzangabe für eine Meßvorschrift vorgegeben, die beispielsweise den Meßbereich lokal definiert oder sonstige Vorgaben für die Messung macht, die vom Lesegerät während der Verifikation automatisch umgesetzt werden können.

Die Messung selbst kann mit optischen oder sonstigen Meßverfahren erfolgen, beispielsweise NMR, magnetisch, elektrisch, etc.. Magnetresonanz-Messungen haben nämlich beispielsweise den Vorteil, daß biogene Substanz eindeutig identifiziert werden kann.

Vor der Anbringung an dem Zugangsberechtigungsmittel wird das biogene Material zweckmäßigerweise konserviert. Je nach Anwendungszweck kann dabei erwünscht sein, daß die Konservierung nur bis zu einem bestimmten Zweitpunkt anhält, so daß danach eine selbsttätige Entwertung eintritt.

Vor der Anbringung an dem Zugangsberechtigungsmittel kann das biogene Material durch spezielle Präparationstechniken auch zusätzlich mit einer künstlichen Kennzeichnung versehen werden. Durch besondere Färbetechniken lassen sich auch vorher nicht deutlich sichtbare Strukturen herausarbeiten, die somit einfacher als Identifikationsmerkmale herangezogen wercen können.

Weiterhin ist ein Zugangsberechtigungsmittel, insbesondere eine Eintrittskarte zur Durchführung des vorangehend geschilderten erfindungsgemäßen Verfahrens Gegenstand der Erfindung. Zweckmäßigerweise ist dabei das biogene Material in einem für das anzuwendende Meßverfahren transparenten Material eingebettet.

Eine transparente Kunststoff-Folienkarte mit eingebetteten Pflanzenteilen oder sonstigen Festkörpern ist zwar bereits aus der DE 43 22642 A1 bekannt. Das eingebrachte Material dient dabei jedoch lediglich zur Dekoration, so daß dessen Nutzung zur Identifikation offensichtlich nicht nahegelegt worden ist.

Grundsätzlich können in der erfindungsgemäßen Eintrittskarte alle vorangehend diskutierten Materialien Verwendung finden, d.h., sowohl pflanzlicher als auch tierischer Herkunft.

Um, wie vorangehend beschrieben, den Lesevorgang zu beschleunigen und die Codierung nochmals zu verbessern, ist es möglich, die Eintrittskarte mit einem maschinenlesbaren Informationsträger zu versehen. Auf einem hierzu beispielsweise verwendeten Speicherchip, Magnetstreifen oder dergleichen können Meßvorschriften oder sonstige Zusatzinformationen angegeben sein.

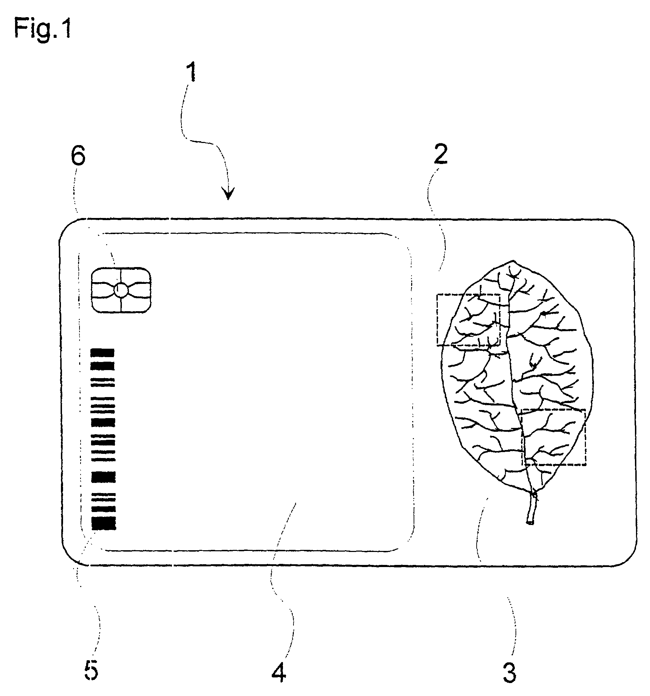

Beispielhaft ist in der Zeichnung als Zugangsberechtigungsmittel zur Durchführung des erfindungsgemäßen Verfahrens eine entsprechend ausgestaltete Eintrittskarte dargestellt, die in Figur 1 als ganzes mit dem Bezugszeichen 1 versehen ist. Diese besteht im wesentlichen aus mindestens zwei aufeinander angebrachten - beispielsweise laminierten, verschweißten oder verklebten - Kunststoffolien 2, von denen zumindest die in der Zeichnung oben liegende glasklar ist. Zwischen diesen beiden Folien 2 ist ein pflanzliches Blatt 3, welches vorab konserviert und gegebenenfalls präpariert, beispielsweise eingefärbt worden ist, fest eingebettet, beispielsweise eingeschweißt oder eingeklebt. Daneben befindet sich ein ebenfalls mit eingebetteter Papierträger 4, der mit einem Barcode 5 und einem Speicherchip 6 versehen ist, auf denen beispielsweise Referenzangaben für das anzuwendende Meßverfahren abgespeichert sind.

Auf dem Barcode 5 oder dem Speicherchip 6 kann beispielsweise verschlüsselt angegeben sein, daß mit einer - im einzelnen nicht dargestellten - Lesevorrichtung nur die gestrichelt eingezeichneten Bereiche des Blattes 3 zur Verifikation durchleuchtet werden.

Durch die Einmaligkeit des hier als biogenen Materials verwendeten Blattes 3, d.h. dessen singulärer Struktur, ist eine Nachahmung praktisch unmöglich. Eine drucktechnische Fälschung würde bereits einem Laien ohne tiefere Kenntnisse auffallen, da die dreidimensionale Struktur des Blattes 3 nicht ohne weiteres verwirklicht werden kann. Mithin zeichnet sich das erfindungsgemäße Verfahren durch eine bisher nicht gekannte Fälschungssicherheit aus.

## Patentansprüche

1. Verfahren zur Herstellung eines nicht personengebundenen Zugangsberechtigungsmittels und zur Verifizierung der Zugangsberechtigung, mit den Verfahrensschritten:
- Anbringung von strukturiertem Material an dem Zugangsberechtigungsmittel;
- definierte Erfassung von charakteristischen Parametern des strukturierten Materials;
- Speicherung der aufgenommenen Parameterdaten in Datensätzen;
- Verifikation durch definierte Messung der vorgegebenen Parameter und Vergleich der dabei ermittelten Parameterdaten mit den vorhandenen Datensätzen;
- Freigabe bei Erfüllung von definierten Koinzidenzkriterien;
**dadurch gekennzeichnet,**
**daß** als strukturiertes Material biogen strukturiertes Material verwendet wird.

2. Verfahren nach Anspruch 1, **dadurch gekennzeichnet, daß** die Erfassung und Messung der Parameter gemäß einer auf dem Zugangsberechtigungsmittel angegebenen Meßvorschrift erfolgt.

3. Verfahren nach Anspruch 1, **dadurch gekennzeichnet, daß** die charakteristischen Parameter Strukturparameter enthalten.

4. Verfahren nach Anspruch 1, **dadurch gekennzeichnet, daß** die charakteristischen Parameter Materialparameter enthalten.

5. Verfahren nach Anspruch 1, **dadurch gekennzeichnet, daß** das biogene Material ein pflanzliches Substrat aufweist.

6. Verfahren nach Anspruch 1, **dadurch gekennzeichnet, daß** das biogene Material ein tierisches Substrat aufweist.

7. Verfahren nach Anspruch 1, **dadurch gekennzeichnet, daß** die Erfassung und Messung der Parameter mit einem optischen Meßverfahren erfolgt.

8. Verfahren nach Anspruch 1, **dadurch gekennzeichnet, daß** die Erfassung und Messung der Parameter mit einem Magnetresonanz-Meßverfahren erfolgt.

9. Verfahren nach Anspruch 1, **dadurch gekennzeichnet, daß** das biogene Material vor der Anbringung konserviert wird.

10. Verfahren nach Anspruch 1, **dadurch gekennzeichnet, daß** das biogene Material mit einer künstlichen Kennzeichnung versehen wird.

## Claims

1. A method of producing a non-person-specific access authorisation means and verifying the access authorisation, comprising the following method steps:
- application of structured material to the access authorisation means;
- defined detection of characteristic parameters of the structured material;
- storage of the received parameter data in data sets;
- verification by defined measurement of the predetermined parameters and comparison of the parameter data ascertained in that case with the existing data sets; and
- enablement upon fulfilment of defined coincidence criteria;
**characterised in that**
biogenically structured material is used as the structured material.

2. A method according to claim 1 **characterised in that** detection and measurement of the parameters is effected in accordance with a measurement specification stated on the access authorisation means.

3. A method according to claim 1 **characterised in that** the characteristic parameters include structure parameters.

4. A method according to claim 1 **characterised in that** the characteristic parameters include material parameters.

5. A method according to claim 1 **characterised in that** the biogenic material has a vegetable substrate.

6. A method according to claim 1 **characterised in that** the biogenic material has a animal substrate.

7. A method according to claim 1 **characterised in that** detection and measurement of the parameters is effected with an optical measuring method.

8. A method according to claim 1 **characterised in that** detection and measurement of the parameters is effected with a magnetic resonance measuring method.

9. A method according to claim 1 **characterised in that** the biogenic material is is preserved prior to the application step.

10. A method according to claim 1 **characterised in that** the biogenic material is provided with an artificial identification.

## Revendications

1. Procédé de fabrication d'un moyen d'autorisation d'accès non lié à des personnes et de vérification de l'autorisation d'accès, comprenant les étapes de procédé suivantes :
- application d'un matériau. structuré au moyen d'autorisation d'accès ;
- saisie définie de paramètres caractéristiques du matériau structuré ;
- stockage des données de paramètre saisies en jeux de données ;
- vérification par mesure définie des paramètres donnés et comparaison des données de paramètre ainsi obtenues avec les jeux de données existants ;
- libération lors du remplissage de critères de coïncidence définis ;
**caractérisé en ce qu'**un matériau structuré d'une manière biogène est utilisé comme matériau structuré.

2. Procédé selon la revendication 1, **caractérisé en ce que** la détection et la mesure des paramètres ont lieu selon une prescription de mesure indiquée sur le moyen d'autorisation d'accès.

3. Procédé selon la revendication 1, **caractérisé en ce que** les paramètres caractéristiques contiennent des paramètres de structure.

4. Procédé selon la revendication 1, **caractérisé en ce que** les paramètres caractéristiques contiennent des paramètres de matériau.

5. Procédé selon la revendication 1, **caractérisé en ce que** le matériau biogène présente un substrat végétal.

6. Procédé selon la revendication 1, **caractérisé en ce que** le matériau biogène présente un substrat animal.

7. Procédé selon la revendication 1, **caractérisé en ce que** la détection et la mesure des paramètres a lieu au moyen d'un procédé de mesure optique.

8. Procédé selon la revendication 1, **caractérisé en ce que** la détection et la mesure des paramètres a lieu au moyen d'une procédé de mesure à résonance magnétique.

9. Procédé selon la revendication 1, **caractérisé en ce que** le matériau biogène est conservé avant l'application.

10. Procédé selon la revendication 1, **caractérisé en ce que** le matériau biogène est pourvu d'une caractérisation artificielle.
